# EUROPEAN PATENT SPECIFICATION

(11) **EP 1 521 808 B1**
(45) Date of publication and mention of the grant of the patent: **01.08.2012**
(21) Application number: 03730351.8
(22) Date of filing: 05.06.2003
(51) Int. Cl.: C09B 35/02, C09B 33/04

(54) **COMPOSITIONS AND INKS CONTAINING DISAZO DYES**
ZUSAMMENSETZUNGEN UND TINTEN WELCHE DIAZO-FARBSTOFFE ENTHALTEN
COMPOSITIONS ET ENCRES CONTENANT DES DISAZOIQUES

(30) Priority: 07.06.2002 GB 0213011
(43) Date of publication of application: 13.04.2005
(73) Proprietor: FUJIFILM Imaging Colorants Limited, Blackley, Manchester M9 8ZS (GB)
(72) Inventor: DICKINSON, Alan, Stirlingshire FK3 8XG (GB); THOMPSON, Neil, James, Manchester M9 8ZS (GB); WIGHT, Paul, Manchester M9 8ZS (GB); GREGORY, Peter, Bolton BL3 4UN (GB); DOUBLE, Philip, John, Manchester M9 8ZS (GB); BRADBURY, Roy, Manchester M9 8ZS (GB)
(74) Representative: Morpeth, Fraser Forrest
(86) International application number: PCT/GB2003/002438
(87) International publication number: WO 2003/104332

(56) References cited:
- EP-A- 0 508 443
- FR-A- 1 486 243
- GB-A- 1 123 094
- US-A- 3 445 450
- US-A- 3 527 749
- US-A- 3 546 202
- US-A- 4 361 842
- PATENT ABSTRACTS OF JAPAN vol. 008, no. 178 (C-238), 16 August 1984 (1984-08-16) & JP 59 075965 A (RICOH KK), 28 April 1984 (1984-04-28)
- PATENT ABSTRACTS OF JAPAN vol. 2002, no. 05, 3 May 2002 (2002-05-03) & JP 2002 020659 A (TAKIMOTO HIROSHI), 23 January 2002 (2002-01-23) cited in the application

## Description

This invention relates to compounds suitable for use as dyes and processes for their manufacture, to compositions derived therefrom and to their use in printing, especially ink jet printing ("IJP"). IJP is a non-impact printing technique in which droplets of a composition are ejected through a fine nozzle onto a substrate without bringing the nozzle into contact with the substrate.

There are many demanding performance requirements for dyes and compositions used in IJP. For example they desirably provide sharp, non-feathered images having good water-fastness, light-fastness and optical density. The compositions are often required to dry quickly when applied to a substrate to prevent smudging, but they should not form a crust over the tip of an ink jet nozzle because this will stop the printer from working. The compositions should also be stable to storage over time without decomposing or forming a precipitate which could block the fine nozzle.

GB 1,130,348 discloses the preparation of metallised disazo reactive dyes derived from chromotropic acid for the conventional dyeing of textiles.

US 4,361,842 discloses the use of metallised compounds derived from chromotropic acid to prolong the service life of recording heads in thermal ink jet printers.

Japanese application JP 2002-20659 discloses recording liquids for ink-jet printing comprising metallised dyes containing a group of the following formula: 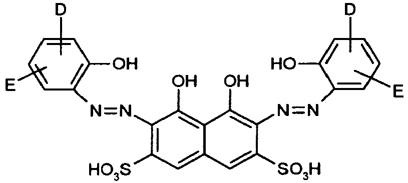 wherein D and E are as defined in JP 2002-20659, wherein both of the phenylazo groups attached to the central chromotropic acid group have a hydroxy substituent ortho to the -N=N- groups as shown above.

Surprisingly it has been found that dyes of the present invention have outstanding properties when used in ink jet inks.

According to the present invention there is provided a process for printing an image on a substrate comprising applying thereto a composition comprising a liquid medium and a compound of Formula (1):

A-N=N-L-N=N-A Formula (1)

wherein:
each A independently is optionally substituted phenyl or optionally substituted 1,2,4 - triazole, each A is different from the other and the optional substituents are selected from sulpho, hydroxy, nitro, amino, acetylamino and carboxy; and
L is a group of Formula (4) or (5): 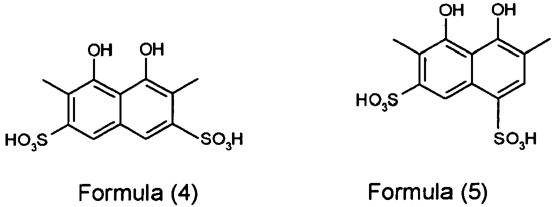 and SO₃H is in free acid or salt form: provided that
   (i) at most one of the groups represented by A has a hydroxy substituent ortho to the -N=N- groups shown in Formula (1); and
   (ii) at least one of the groups represented by A carries a group selected from sulpho and carboxy.

Preferably the composition is applied to the substrate by means of an ink jet printer. The ink jet printer preferably applies the composition to the substrate in the form of droplets which are ejected through a small orifice onto the substrate. Preferred ink jet printers are piezoelectric ink jet printers and thermal ink jet printers. In thermal ink jet printers, programmed pulses of heat are applied to the composition in a reservoir by means of a resistor adjacent to the orifice, thereby causing the composition to be ejected in the form of small droplets directed towards the substrate during relative movement between the substrate and the orifice. In piezoelectric ink jet printers the oscillation of a small crystal causes ejection of the composition from the orifice.

The substrate is preferably paper, plastic, a textile, metal or glass, more preferably a treated substrate such as a coated paper or coated plastic, especially coated paper. Preferred plain or treated papers are papers which may have an acid, alkaline or neutral character. Examples of commercially available treated papers include HP Premium^{™} Coated Paper, HP Photopape^{™}, HP Printing Paper^{™}, HP new and improved Premium Plus Photopaper^{™} (available from Hewlett Packard Inc.); Stylus Pro^{™} 720 dpi Coated Paper, Epson Photo Quality^{™} Glossy Film, Epson Photo Quality^{™} Glossy Paper, Epson Premium PhotoPaper^{™} (all available from Seiko Epson Corp.); Canon HR 101^{™} High Resolution Paper, Canon GP 201^{™} Glossy Paper, Canon HG 101^{™} and HG 201^{™} High Gloss Film, Canon PR101^{™} (all available from Canon); Kodak Premium Photopaper^{™}, Kodak Premium InkJetpape^{™} (available from Kodak); Konica Inkjet Paper QP^{™} Professional Photo Glossy, Konica Inkjet Paper QP^{™} Professional Photo 2-sided Glossy, Konica Inkjet Paper QP^{™} Premium Photo Glossy, Konica Inkjet Paper QP^{™} Premium Photo Silky (available from Konica); Ilford Instant Dry Paper^{™} (available from Ilford).

Preferably each A independently carries from 0 to 3 substituents, more preferably 1 or 2 substituents.

As examples of optionally substituted phenyl groups represented by A there may be mentioned 2-sulphophenyl, 3-sulphophenyl, 4-sulphophenyl, 2-nitrophenyl, 3-nitrophenyl, 4-nitrophenyl, 2 2-sulpho-4-aminophenyl, 2-sulpho-4-acetylaminophenyl, , 2-sulpho-5-aminophenyl, 3-sulpho-4-nitrophenyl, 3-sulpho-4-aminophenyl, 2-sulpho-4-nitrophenyl, 2,5-disulfophenyl, 2-5-disulpho-4-acetylaminophenyl, 2-hydroxy-3,5-disulphophenyl, 2-carboxy-4-acetylaminophenyl, 2-carboxy-4-aminophenyl and 3,5-dicarboxyphenyl.

Preferably both of the groups represented by A are free from hydroxy substituents ortho to the -N=N- groups shown in Formula (1).

When L is metallised (i.e. a metal complex) the metal is preferably B or a transition metal, more preferably Mn, Fe, Cr, Co, Ni, Cu or Zn, especially Co, Ni or Cu. The metal may be complexed with the compound of Formula (1) in a ratio of from 1:2 to 2:1, preferably in a ratio of metal to compound of Formula (1) of 1:2, 2:3, 1:1, 2:2 or 2:1, especially 2:1. However we have found that when L is not metallised the compound of Formula (1) is still a valuable colorant for ink jet printing. Such unmetallised dyes are cheaper and easier to make than the corresponding metallised dyes and they are more environmentally friendly due to the absence of transition metals. Furthermore the absence of transition metals also reduces the likelihood of nozzle blockage in thermal ink jet printers.

According to a second aspect of the present invention there is provided a composition comprising:
(a) 0.2 to 12 parts of the compound of Formula (1)

   A-N=N-L-N=N-A Formula (1)

   wherein:
   each A independently is optionally substituted phenyl or optionally substituted 1,2,4 - triazole, each A is different from the other and the optional substituents are selected from sulpho, hydroxy, nitro, amino, acetylamino and carboxy; and
   L is a group of Formula (4) or (5): 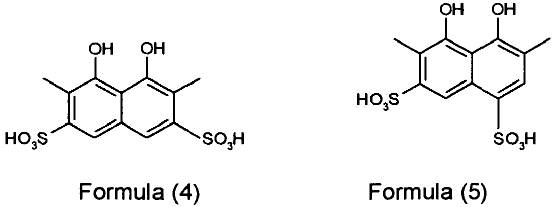 and SO₃H is in free acid or salt form; provided that at most one of the groups represented by A has a hydroxy substituent ortho to the -N=N- groups shown in Formula (1); and
(b) from 88 to 99.8 parts of a liquid medium;
wherein all parts are by weight and the number of parts of (a)+(b)=100.

The composition used in the first aspect of the invention is preferably as defined in the second aspect of the present invention.

The number of parts of component (a) is preferably from 0.2 to 12, more preferably from 0.5 to 10, and especially from 1 to 8 parts. The number of parts of component (b) is preferably from 99.8 to 88, more preferably from 99.5 to 90, especially from 99 to 92 parts.

When the medium is a liquid, preferably component (a) is completely dissolved in component (b). Preferably component (a) has a solubility in component (b) at 20°C of at least 10%. This allows the preparation of liquid dye concentrates which may be used to prepare inks and reduces the chance of the dye precipitating if evaporation of the liquid medium occurs during storage.

Preferred liquid media include water or a mixture of water and an organic solvent.

When the liquid medium comprises a mixture of water and an organic solvent, the weight ratio of water to organic solvent is preferably from 99:1 to 1:99, more preferably from 99:1 to 50:50 and especially from 95:5 to 70:30.

It is preferred that the organic solvent present in the mixture of water and organic solvent is a water-miscible organic solvent or a mixture of such solvents. Preferred water-miscible organic solvents include C₁-₆-alkanols, preferably methanol, ethanol, n-propanol, isopropanol, n-butanol, sec-butanol, tert-butanol, n-pentanol, cyclopentanol and cyclohexanol; linear amides, preferably dimethylformamide or dimethylacetamide; ketones and ketone-alcohols, preferably acetone, methyl ether ketone, cyclohexanone and diacetone alcohol; water-miscible ethers, preferably tetrahydrofuran and dioxane; diols, preferably diols having from 2 to 12 carbon atoms, for example pentane-1,5-diol, ethylene glycol, propylene glycol, butylene glycol, pentylene glycol, hexylene glycol and thiodiglycol and oligo- and poly-alkyleneglycols, preferably diethylene glycol, triethylene glycol, polyethylene glycol and polypropylene glycol; triols, preferably glycerol and 1,2,6-hexanetriol; mono-C₁₋₄-alkyl ethers of diols, preferably mono-C₁-₄-alkyl ethers of diols having 2 to 12 carbon atoms, especially 2-methoxyethanol, 2-(2-methoxyethoxy)ethanol, 2-(2-ethoxyethoxy)-ethanol, 2-[2-(2-methoxyethoxy)ethoxy]ethanol, 2-[2-(2-ethoxyethoxy)-ethoxy]-ethanol and ethyleneglycol monoallylether; cyclic amides, preferably 2-pyrrolidone, N-methyl-2-pyrrolidone, N-ethyl-2-pyrrolidone, caprolactam and 1,3-dimethylimidazolidone; cyclic esters, preferably caprolactone; sulphoxides, preferably dimethyl sulphoxide and sulpholane. Preferably the liquid medium comprises water and 2 or more, especially from 2 to 8, water-soluble organic solvents.

Especially preferred water-soluble organic solvents are cyclic amides, especially 2-pyrrolidone, N-methyl-pyrrolidone and N-ethyl-pyrrolidone; diols, especially 1,5-pentane diol, ethyleneglycol, thiodiglycol, diethyleneglycol and triethyleneglycol; and mono- C₁₋₄-alkyl and C₁₋₄-alkyl ethers of diols, more preferably mono- C₁₋₄-alkyl ethers of diols having 2 to 12 carbon atoms, especially ((2-methoxy-2)-ethoxy)-2-ethoxyethanol.

Examples of further suitable ink media comprising a mixture of water and one or more organic solvents are described in US 4,963,189, US 4,703,113, US 4,626,284 and EP 4,251,50A.

The pH of the composition is preferably from 4 to 11, more preferably from 7 to 10.

The viscosity of the composition at 25°C is preferably less than 50cP, more preferably less than 20 cP and especially less than 5cP.

When the compositions according to the invention are used as ink jet printing compositions, the composition preferably has a concentration of halide ions of less than 500 parts per million, more preferably less than 100 parts per million. It is especially preferred that the composition has less than 100, more preferably less than 50 parts per million of divalent and trivalent metals, wherein parts refer to parts by weight relative to the total weight of the composition. We have found that purifying the compositions to reduce the concentration of these undesirable ions reduces nozzle blockage in ink jet printing heads, particularly in thermal ink jet printers.

The compounds of Formula (1) may be used as the sole colorant in the compositions because of their attractive black shade. However, if desired, one may combine the present compounds with one or more further colorants if a slightly different shade is required for a particular end use. The further colorants are preferably dyes. When further colorants are included in the composition these are preferably selected from but not limited to black, magenta, cyan and yellow colorants and combinations thereof.

Suitable further black colorants include C.I.Food Black 2, C.I.Direct Black 19, C.I.Reactive Black 31, PRO-JET^{™} Fast Black 2, C.I.Direct Black 195; C.I.Direct Black 168; and black dyes described in patents by Lexmark (e.g. EP0539178A2, Example 1, 2, 3, 4 and 5), Orient Chemicals (e.g. EP 0 347 803 A2, pages 5-6, azo dyes 3, 4, 5, 6, 7, 8, 12, 13, 14, 15 and 16) and Seiko Epson Corporation.

Suitable further magenta colorants include PRO-JET^{™} Fast Magenta 2.

Suitable further yellow colorants include C.I.Direct Yellow 142; C.I.Direct Yellow 132; C.I.Direct Yellow 86; C.I.Direct Yellow 85; C.I. Direct Yellow 173; and C.I.Acid Yellow 23.

Suitable further cyan colorants include phthalocyanine colorants, Direct Blue 199 and Acid Blue 99.

The composition according to the second aspect of the present invention and that used in the process according to the first aspect of the present invention may also contain additional components conventionally used in ink jet printing inks, for example viscosity and surface tension modifiers, corrosion inhibitors, biocides, kogation reducing additives and surfactants which may be ionic or non-ionic.

In a third aspect of the invention we have also devised a process for preparing a compound of Formula (1) as hereinbefore defined which comprises diazotising an amine of formula A-NH₂ to give a diazonium salt, and coupling the resultant diazonium salt with a compound of Formula (6):

A-N=N-LH Formula (6)

wherein L and each A independently is as hereinbefore defined.

Preferably the diazotisation is performed using a diazotising agent, especially sodium nitrite. Further preferably the diazotisation is performed at a temperature of 0 to 5°C. Surprisingly we have found that the coupling can be performed under conditions of moderate, i.e relatively neutral, pH facilitated by the use of substantial amounts of aprotic solvents. Typically the diazotisation is performed in a liquid medium. Preferred liquid media are water and compositions comprising water and an organic solvent, especially an aprotic solvent. Aprotic solvents which may be used may be chosen from, for example, dimethylformamide, dimethylsulphoxide, N-methylpyrrolidone, 2-pyrrolidone, ethers, acetone, glymes such as polyglyme (MW 300) or polyethylene glycols and/or mixtures thereof. Particularly preferred aprotic solvents are tetrahydrofuran, N-methylpyrrolidone and polyglyme. The aprotic solvent is preferably present in the range 0 to 80 wt%, preferably 20 to 60 wt%, especially 25 to 45 wt% relative to the total weight of the liquid medium. Use of substantial amounts of aprotic solvents has the advantage of permitting diazo coupling at much lower pH than customary (usually pH in the region of 14), thereby significantly improving the efficiency, from 30% to as much as 70%, of the process as a result of greatly reduced decomposition of diazonium salts.

Preferably the process of the third aspect of the present invention is performed in the presence of an acid binding agent to maintain a moderate pH. Preferably the acid binding agent used is any which maintains the pH between 5 and 9, preferably between 6 and 7.5. Further, the acid binding agent is preferably selected from but is not limited to alkali metal hydroxides, carbonates, bicarbonates or phosphates or organic bases such as triethanolamine or triethylamine. Particularly preferred alkali metal hydroxide acid-binding agents are NaOH, KOH and LiOH, especially NaOH and LiOH. Particularly preferred alkali metal carbonate acid-binding agents are Li₂CO₃ and Na₂CO₃, especially Na₂CO₃ . This has the advantage of maintaining pH sufficiently low to reduce the decomposition of diazonium salts significantly.

A fourth feature of the present invention comprises a process for the preparation of a compound of Formula (1) which comprises the reaction of a compound of formula AN=N-Q-N=N-A (wherein each A independently is as hereinbefore defined and Q is an 1-hydroxy-8-amino-naphthylene disulphonic acid) with a strong base thereby forming a compound for Formula (1) as hereinbefore defined, optionally followed by contacting the compound so formed with a metal salt. Preferably the strong base is a metal hydroxide, more preferably an alkali metal hydroxide, especially sodium or potassium hydroxide.

The reaction with strong base preferably comprises heating in solution at an elevated temperature until reaction is complete. Preferred elevated temperatures are 60 to 90°C, more preferably 65 to 80 °C, especially 65 to 75 °C. The pH is preferably alkaline, more preferably 10 to 14, especially 12 to 14.

The compound of formula A-N=N-Q-N=N-A is preferably formed by diazotising an amine of formula A-NH₂, as defined above, and coupling the resultant diazonium salt with an azo compound of Formula H-Q-N=N-A wherein each A independently and Q are hereinbefore defined.

The process according to the fourth aspect of the present invention has the unexpected advantage of using common and cheaply available starting materials based on 1-amino-8-hydroxynaphthylene disulphonic acid and thereby increases the breadth of diazo components which may be used in the coupling reactions, thus significantly increasing the synthetic versatility of the standard coupling process. In a further optional step, the process comprises the complexation of a compound of Formula (1) with a metal, preferably a transition metal.

A fifth aspect of the invention provides a disazo compound of Formula (1) or a salt thereof:

A-N=N-L-N=N-A Formula (1)

wherein:
each A independently is optionally substituted phenyl or optionally substituted 1,2,4 - triazole, each A is different from the other and the optional substituents are selected from sulpho, hydroxy, nitro, amino, acetylamino and carboxy; and
L is a group of Formula (4) or (5): 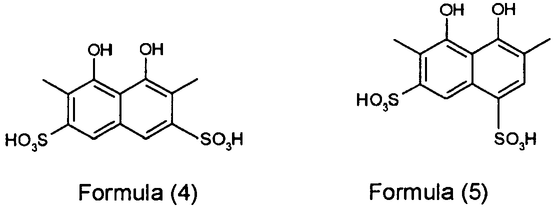 SO₃H is in free acid or salt form;
provided that:
(i) at most one of the groups represented by A has a hydroxy substituent ortho to the -N=N- groups shown in Formula (1);
Preferably both groups represented by A carry a group selected from sulpho and carboxy groups, more preferably both groups represented by A carry a sulpho group. Preferences for A and L in the compounds of the fifth aspect of the invention are as hereinbefore defined in relation to the first aspect of the invention.

A further aspect of the present invention provides a paper, an overhead projector slide or a textile material printed with a composition, a compound or by means of a process according to the present invention.

A still further as aspect of the present invention provides an ink jet printer cartridge, optionally refillable, comprising one or more chambers and a composition, wherein the composition is present in at least one of the chambers, and the composition is as defined in the second aspect of the present invention.

The present compounds and compositions provide prints of attractive, neutral black shades which are particularly well suited for the ink jet printing of text and images. The compositions have good storage stability and low tendency to block the very fine nozzles used in ink jet printers. Furthermore, the resultant images have good optical density, light-fastness, wet-fastness and resistance to fading in the presence of oxidising air pollutants (e.g. ozone).

The invention is illustrated by the following Examples in which all parts and percentages are by weight unless specified otherwise.

### Example 1

Preparation of:

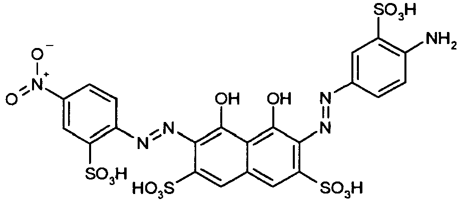

### Stage (A) - Diazotisation and Coupling

5-Nitro-2-aminobenzene sulphonic acid (21.8 g, 0.10 moles) was added to water (300 ml), containing concentrated hydrochloric acid (30 g). Sodium nitrite (6.9 g, 0.10 moles) was added over 15 minutes at 0 to 5°C. After 60 minutes the excess nitrous acid was destroyed and to the resultant solution of diazonium salt was added slowly at 5 to 10°C and pH 1 to 2, a solution of 1-hydroxy-8-aminonaphthalene-3,6-disulphonic acid (31.9 g, 0.10 moles), which had been re-precipitated in water (500 ml).

2-Acetylamino-5-aminobenzene sulphonic acid (23.0 g, 0.11 moles) was added to water (300 ml), containing concentrated hydrochloric acid (32.6 g). Sodium nitrite (7.6 g) was added over 10 minutes at 0 to 5°C. After 60 minutes the resultant solution of diazonium salt was added over 120 minutes at 5 to 10°C and pH 8 to 9, to the above dye solution. After 10 hours the resultant product was precipitated by the addition of sodium chloride (100 g) and collected. The paste was then oven dried to give a dark blue solid (71g).

### Stage (B) - Conversion of Amino to Hydroxy Group

The dark blue solid from Stage (A) above was dissolved in water (1000 ml) and heated to 80°C. Sodium hydroxide (40 g) was added and the temperature maintained at 70°C for 10 hours. After this time the pH was adjusted to pH 1 with concentrated hydrochloric acid and the solution allowed to cool to ambient temperature. The precipitate was then collected. The paste was then oven-dried to give 7.5 g of a black solid.

The black solid was dissolved in water (50 g) at pH 7 to 8 by the addition of sodium hydroxide (pearl). The solution was then dialysed using Visking^{™} tubing (<50 µScm⁻¹) and then screened through a cascade of filters (GF/A, GF/D, 0.45 µm) and dried in the oven to give the title product (7g) as a black solid.

### Example 2

Preparation of:

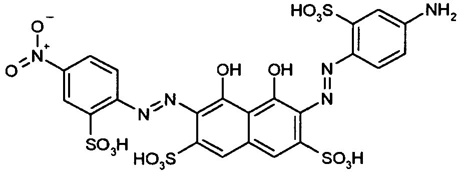

5-Acetylamino-2-aminobenzene sulphonic acid (23.0 g, 0.10 moles) was added to water (300 ml), containing concentrated hydrochloric acid (30 g). Sodium nitrite (6.9 g) was added over 10 minutes at 0 to 5°C. After 60 minutes the excess nitrous acid was destroyed and the resultant solution of diazonium salt was added slowly at 5 to 10°C and pH 8 to 9, to a solution of 1,8-dihydroxynaphthalene-3,6-disulphonic acid (32.0 g, 0.10 moles), which had been dissolved in water (500 g). The reaction was shown to have reacted quantitatively by HPLC.

5-Nitro-2-aminobenzene sulphonic acid (43.6 g, 0.20 moles) was added to water (500 g), containing concentrated hydrochloric acid (60 g). Sodium nitrite (13.8 g) was added over 15 minutes at 0 to 5°C. After 60 minutes the resultant solution of diazonium salt was added over 120 minutes at 5 to 10°C to the above dye solution to which previously had been added tetrahydrofuran (1000 g), whilst maintaining the pH at 7 by addition of solid Na₂CO₃. After 5 hours the resultant precipitate was then collected and after oven drying gave a dark red solid (55.3 g).

The above dark red solid was dissolved in water (1000 ml) and heated to 80°C. Sodium hydroxide (10 g) was added and the temperature maintained at 80°C for 8 hours. After this time the pH was adjusted to 7 to 8 with concentrated hydrochloric acid and the solution allowed to cool to ambient temperature. The solution was then dialysed using Visking^{™} tubing (<50 µScm⁻¹) and then screened through a cascade of filters (GF/A, GF/D, 0.45 µm) and dried in the oven to give the title product as a black solid (47.2g) (λₘₐₓ = 568nm).

### Example 3

Preparation of:

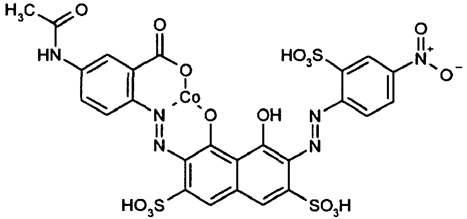

A slurry of 5-acetylamino-2-aminobenzene carboxylic acid (64 g) and sodium nitrite (24 g) in water (500 ml) was added over 40 minutes to a mixture of hydrochloric acid (120 ml, 36°Tw) and ice (120 g). The resultant mixture was stirred at <5°C for 30 minutes and then excess nitrous acid was destroyed with sulfamic acid solution (10% w/v). The resulting solution was added over 1 hour to a solution of chromotropic acid (100 g) in water (800 ml) and ice (200 g) at pH 8 (sodium hydroxide, 48% w/v) at <5°C. During the addition the solution was maintained at pH 8-9.5. After a further hour the solution was allowed to warm to room temperature and stirred overnight.

The solution was adjusted to pH 1, filtered and the paste was washed with sodium chloride solution (500 ml, 17% w/v). The paste was then slurried in acetone (1000 ml) and dried in an oven to give a purple solid (152 g).

Cobalt acetate (11 g) was added in one portion to a solution of the purple solid (35 g) in water (350 ml) at 80°C and pH 8.5 (concentrated ammonia solution) which was stirred for 2 hours. The solution was adjusted to pH 8.5 (concentrated ammonia solution) and allowed to cool to room temperature and stirred overnight.

Sodium chloride (35 g) was added to the solution which was stirred for one hour. A further portion of sodium chloride (35 g) was added and after one hour the mixture was filtered, washed with sodium chloride solution (300 ml, 20% w/v) and the resultant paste was slurried in acetone (500 ml) and collected by filtration. The paste was dried in an oven to give a dark blue solid (20 g).

A solution of 5-nitro-2-aminobenzene sulphonic acid (7 g) and sodium nitrite (2.5 g) in water (100 ml) at pH 8 (sodium hydroxide, 48% w/v) was added to a mixture of hydrochloric acid (20 ml, 36°Tw) and ice (20 g) over 20 minutes at <5°C. The mixture was stirred for 30 minutes and the excess nitrous acid was destroyed with sulfamic acid solution (10% w/v). This mixture was added dropwise over 35 minutes to a solution of the dark blue solid obtained above (18 g) in water (180 ml) and ice (20 g) at pH 8 (sodium hydroxide solution, 48% w/v) at <5°C. During the addition the solution was maintained at pH 8-9.5. The solution was stirred for a further hour at <5°C and then allowed to warm to room temperature overnight at pH 8.5.

Sodium chloride (45 g) was added and the solution was stirred for 2 hours. The resulting mixture was filtered and the collected paste was washed with sodium chloride solution (200 ml, 15% w/v). The paste was then slurried in acetone (500 ml), collected by filtration and slurried in acetone (300 ml) and collected. The resulting solid was dissolved in water (150 ml), dialysed using Visking^{™} tubing (<50 µScm⁻¹) and the resulting solution was screened through a cascade of filters (GF/A, GF/D, 0.45 µm) and dried in the oven to give the title product as a black solid (9 g).

### Examples 4 to 6

The method of Example 1 was repeated except that in place of 5-nitro-2-aminobenzene sulphonic acid there was used the amine listed in Table 1, column A and in place of 2-acetylamino-5-aminobenzene sulphonic acid there was used the amine indicated in column B. For examples 4, 5 and 7, 1-hydroxy-8-aminonaphthalene-3,5-disulphonic acid was used in place of 1-hydroxy-8-aminonaphthalene-3,6-disulphonic acid. The resultant dyes had the formula shown in column C.

**Table 1**

| Ex. | A | B | C | λₘₐₓ(nm) |
|---|---|---|---|---|
| 4 | 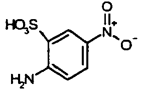 | 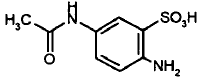 | 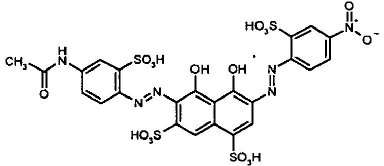 | 545 |
| 5 | 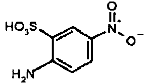 | 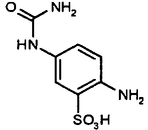 | 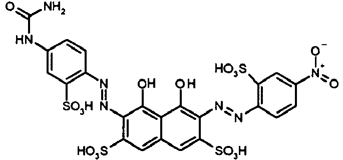 | - |
| 6* | 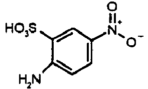 | 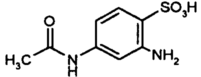 | 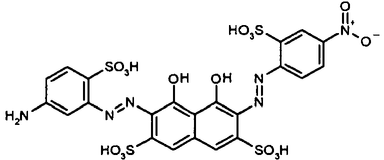 | - |

| | | | | |
|---|---|---|---|---|
| * synthesis included an additional hydrolysis step in aqueous sodium hydroxide to remove the acetyl group. | | | | |

### Examples 7 to 53

The method of Example 2 was repeated except that in place of 5-acetylamino-2-aminobenzene there was used the amine listed in Table 2, column A and in place of 5-nitro-2-aminobenzene sulphonic acid there was used the amine indicated in column B. The resultant dye had the formula shown in column C. In examples 29, 30, 31, 38 and 39 the resultant dye is a metal complex, complexation was carried out, here as a final step, in an analogous manner to Example 3 above using copper(II) acetate, cobalt(II) acetate or nickel(II) acetate as appropriate.

**Table 2**

| Ex. | A | B | C | λₘₐₓ(nm) |
|---|---|---|---|---|
| 7 | 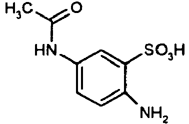 | 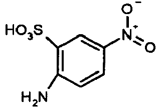 | 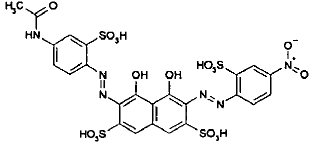 | 556 |
| 8 | 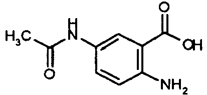 | 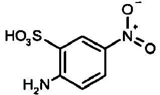 | 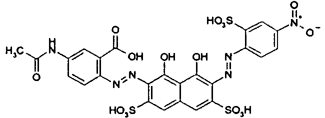 | 572 |
| 9 | 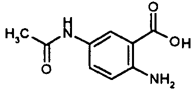 | 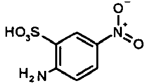 | 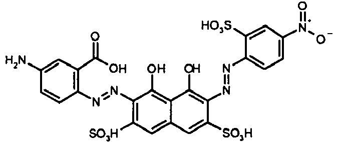 | - |
| 10 | 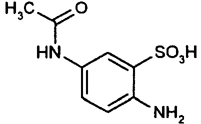 | 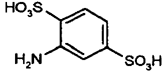 | 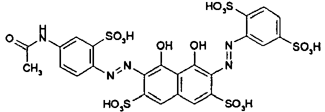 | 574 |
| 11 | 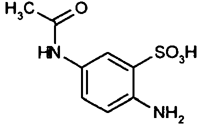 | 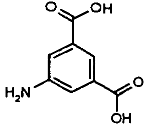 | 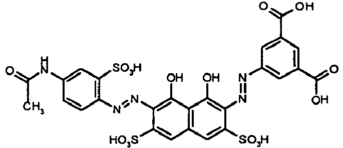 | 570 |
| 12 | 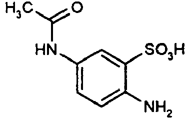 | 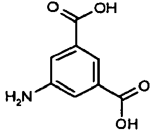 | 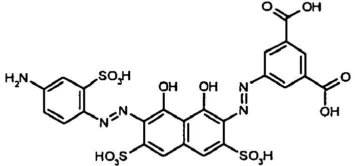 | 580 |
| 13# | 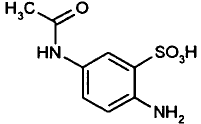 | 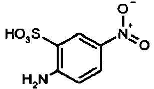 | 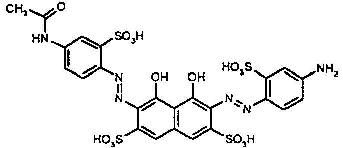 | 580 |
| 14* | 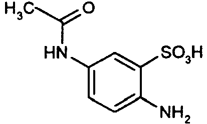 | 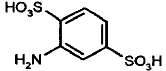 | 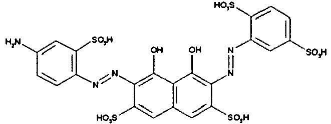 | 574 |
| 15 | 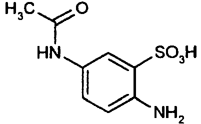 | 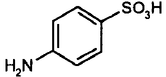 | 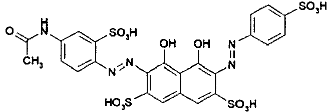 | - |
| 16* | 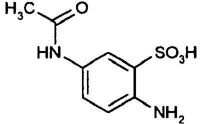 | 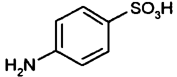 | 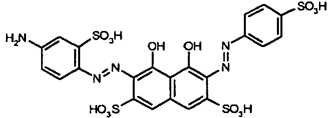 | 576 |
| 17 | 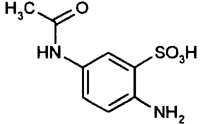 | 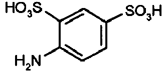 | 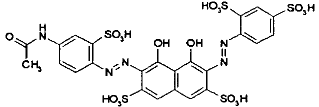 | 562 |
| 18* | 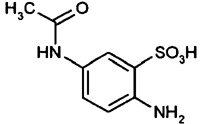 | 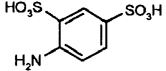 | 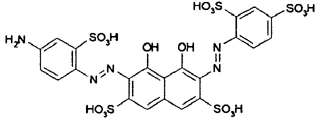 | 572 |
| 19 | 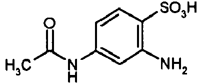 | 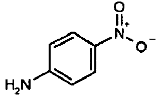 | 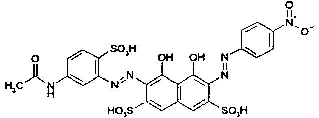 | 570 |
| 20 | 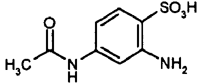 | 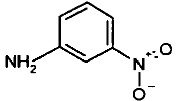 | 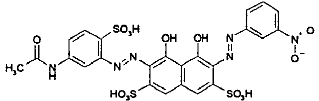 | 543 |
| 21 | 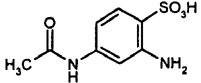 | 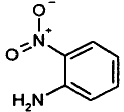 | 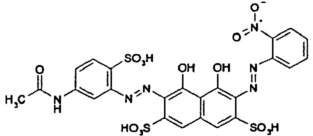 | 574 |
| 22* | 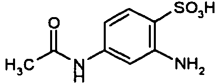 | 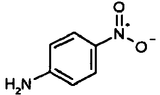 | 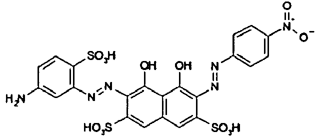 | 568 |
| 23* | 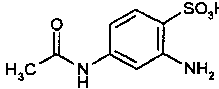 | 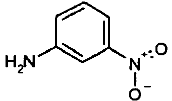 | 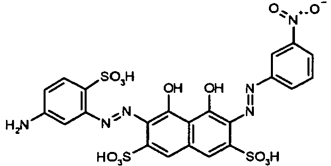 | 553 |
| 24* | 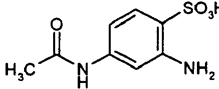 | 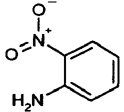 | 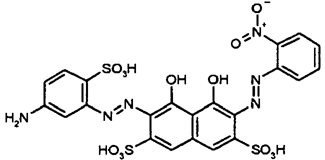 | 572 |
| 25 | 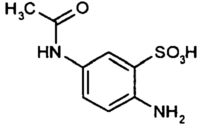 | 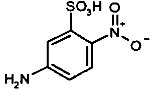 | 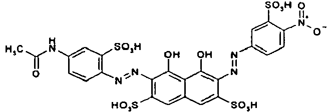 | 552 |
| 26* | 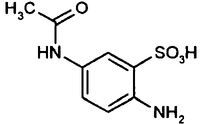 | 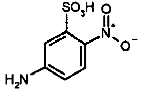 | 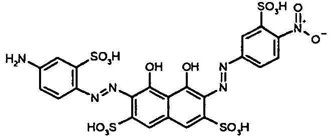 | 573 |
| 27 | 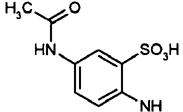 | 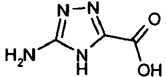 | 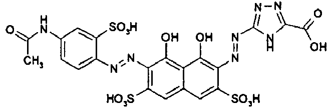 | 562 |
| 28* | 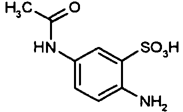 | 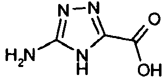 | 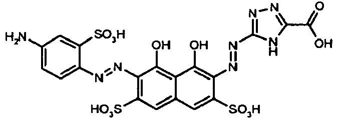 | 558 |
| 29 | 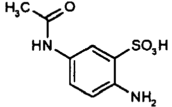 | 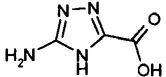 | 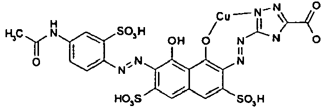 | 658 |
| 30 | 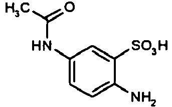 | 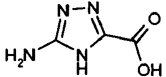 | 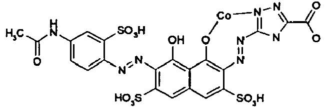 | - |
| 31 | 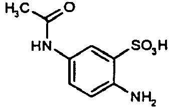 | 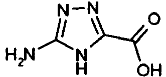 | 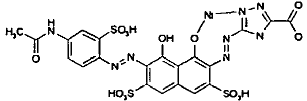 | - |
| 32 | 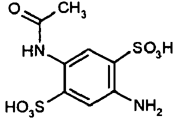 | 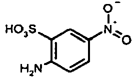 | 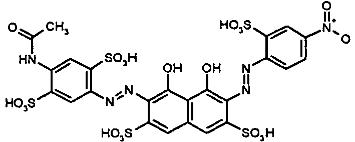 | 552 |
| 33* | 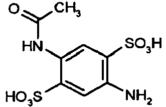 | 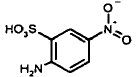 | 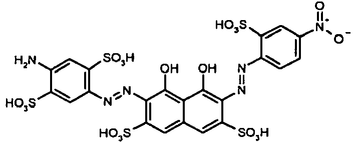 | - |
| 34 | 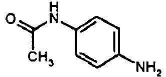 | 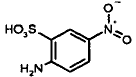 | 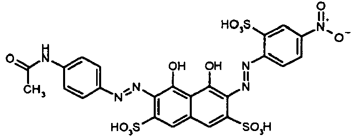 | 547 |
| 35* | 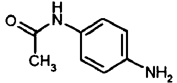 | 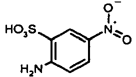 | 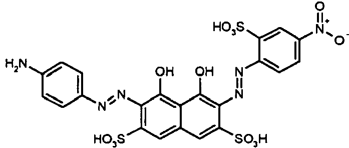 | 555 |
| 36 | 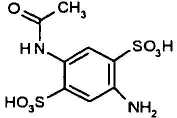 | 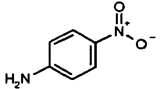 | 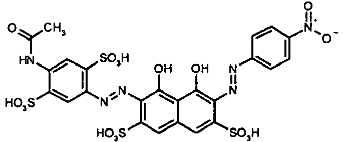 | 574 |
| 37* | 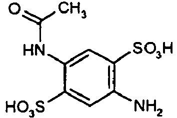 | 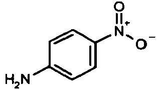 | 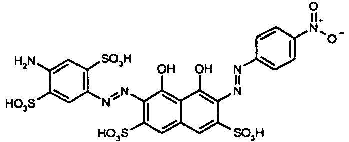 | 573 |
| 38 | 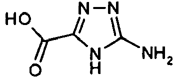 | 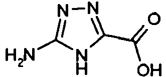 | 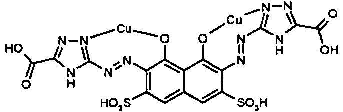 | - |
| 39 | 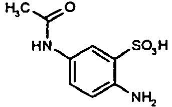 | 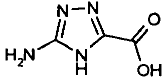 | 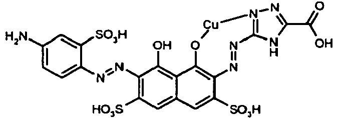 | 590 |
| 40 | 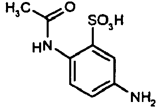 | 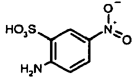 | 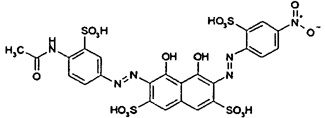 | 550 |
| 41 | 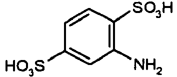 | 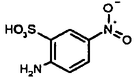 | 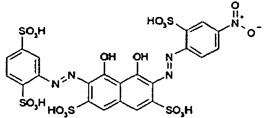 | 558 |
| 42 | 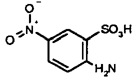 | 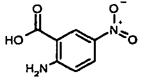 | 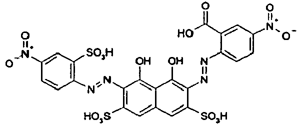 | 622 |
| 43 | 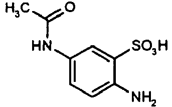 | 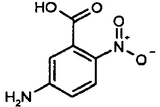 | 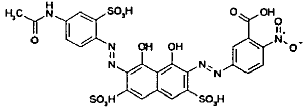 | - |
| 44* | 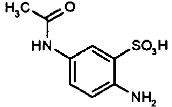 | 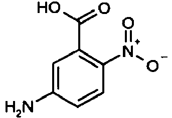 | 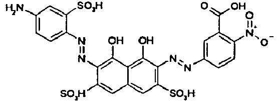 | 578 |
| 45 | 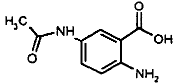 | 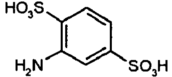 | 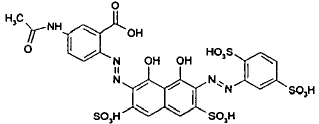 | 594 |
| 46 | 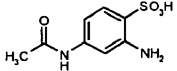 | 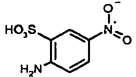 | 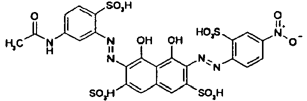 | 560 |
| 47 | 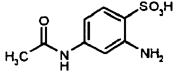 | 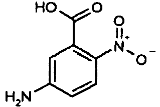 | 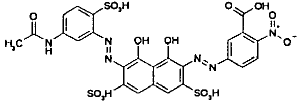 | 573 |
| 48* | 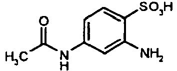 | 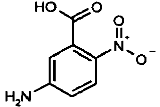 | 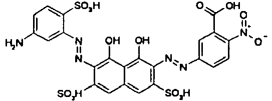 | 582 |
| 49* | 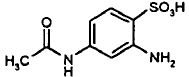 | 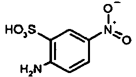 | 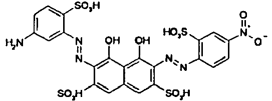 | 555 |
| 50 | 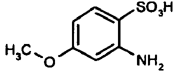 | 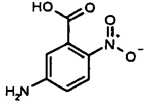 | 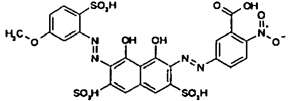 | 571 |
| 51 | 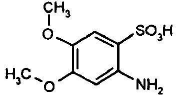 | 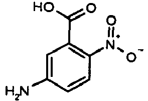 | 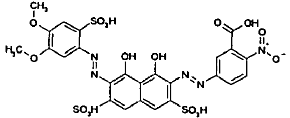 | 565 |
| 52 | 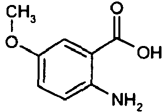 | 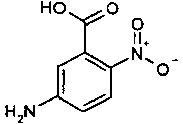 | 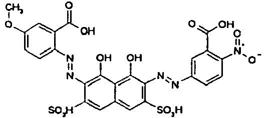 | 585 |
| 53 | 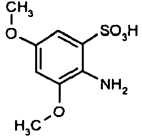 | 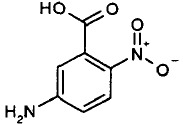 | 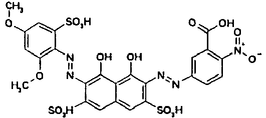 | 571 |

| | | | | |
|---|---|---|---|---|
| * synthesis included an additional hydrolysis step in aqueous sodium hydroxide to remove the acetyl group. | | | | |

### Examples 54 to 59

The method of Example 3 was repeated except that in place of 5-acetylamino-2-aminobenzene carboxylic acid there was used the amine listed in Table 3, column A and in place of 5-nitro-2-aminobenzene sulphonic acid there was used the amine indicated in column B, and in place of cobalt acetate there was used the acetate of the metal indicated. The resultant dye had the formula shown in column C.

**Table 3**

| Ex. | A | B | C | λₘₐₓ (nm) |
|---|---|---|---|---|
| 54 | 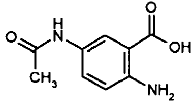 | 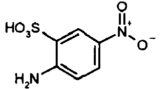 | 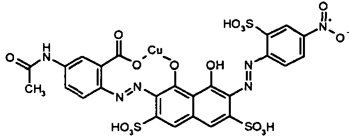 | 600 |
| 55 | 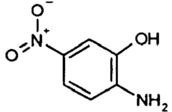 | 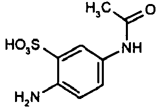 | 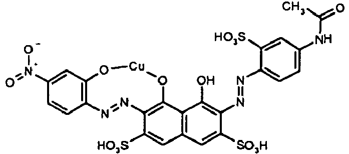 | 633 |
| 56 | 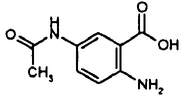 | 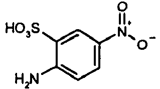 | 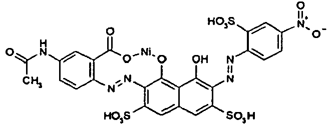 | 599 |
| 57 | 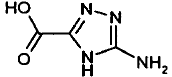 | 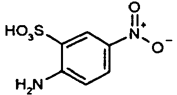 | 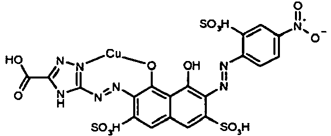 | 642 |
| 58 | 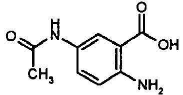 | 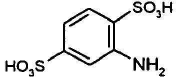 | 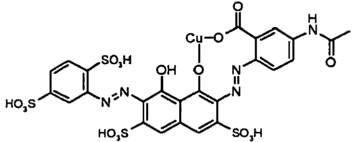 | 560 |
| 59 | 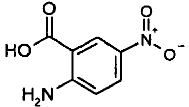 | 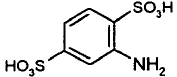 | 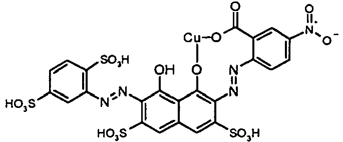 | 539 |

### Example 60 - Ink formulations

Inks were prepared according to the following formulation, wherein Dye was each of the dyes from the Examples 1, 2, 3, 7, 27 and 32 above:

| | |
|---|---|
| 2-Pyrrolidone | 5 parts |
| Thiodiglycol | 5 parts |
| Surfynol^{™} 465 | 1 part (from Air Products Inc., USA) |
| Dye | 3.5 parts |
| Water | 85.5 parts |

Further inks described in Tables 4 and 5 may be prepared wherein the Dye described in the first column is the Dye made in the above example of the same number. Numbers quoted in the second column onwards refer to the number of parts of the relevant ingredient and all parts are by weight. The inks may be applied to paper by thermal or piezo ink jet printing.

**Table 4**

| Dye | Dye Content | Water | PG | DEG | NMP | DMK | NaOH | Na Stearate | IPA | MEOH | 2P | MIBK |
|---|---|---|---|---|---|---|---|---|---|---|---|---|
| 1 | 2.0 | 80 | 5 | | 6 | 4 | | | | | 5 | |
| 2 | 3.0 | 90 | | 5 | 5 | | 0.2 | | | | | |
| 3 | 10.0 | 85 | 3 | | 3 | 3 | | | | 5 | 1 | |
| 4 | 2.1 | 91 | | 8 | | | | | | | | 1 |
| 5 | | 81 | | | | | | 0.5 | | | | |
| 6 | 1.1 | 60 | 4 | | 9 | | 0.5 | | 6 | | 9 | |
| | 2.5 | | | 15 | 3 | 3 | | | | 10 | 5 | 4 |
| 7 | | 75 | 5 | | | | | | | | | |
| 8 | 2.4 | 65 | | 4 | | 5 | | | | 6 | | 5 |
| 9 | 3.2 | 96 | | | | | | | 5 | | | |
| 10 | 5.1 | 90 | | 5 | 4 | 6 | | | | 4 | 6 | 5 |
| 11 | 10.8 | 80 | 5 | | | | | | 5 | 4 | | |
| 12 | 10.0 | 84 | 2 | | | | | | 1 | | | |
| 13 | 2.6 | 80 | | 6 | 2 | 5 | | | | | 4 | |
| 14 | 3.3 | 90 | | | | | | | | | 5 | |
| 15 | 12.0 | 69 | 2 | | 11 | | | | | | | |
| 16 | 5.4 | 91 | | | | 10 | | | 3 | 2 | | 6 |
| | 6.0 | | 2 | 20 | | 7 | 0.3 | | | | 3 | |
| | | | | | 2 | 1 | | | | | 5 | 3 |
| | | | | | 4 | | | | | | | |

**Table 5**

| Dye | Dye Content | Water | PG | DEG | NMP | CET | TBT | TDG | BDL | PHO | 2P | PI2 |
|---|---|---|---|---|---|---|---|---|---|---|---|---|
| 17 | 3.0 | 80 | 15 | | | 0.2 | | | | | 5 | |
| 18 | 9.0 | 90 | | 5 | | | | | | 1.2 | | 5 |
| 19 | 2.0 | 90 | | 10 | | | | | | | | |
| 20 | 2 | 88 | | | | | | 10 | | | | |
| 21 | 5 | 78 | | | 5 | | | 12 | | | 5 | |
| 22 | 8 | 70 | 2 | | 8 | | | 15 | | | 5 | |
| 23 | 10 | 80 | | 10 | | | | 8 | | | 12 | |
| 24 | 10 | 80 | | | | | | | | | | |

### Example 61 - Ink Jet Printing

The inks prepared in Example 60 were ink-jet printed onto the following papers using a Hewlett Packard DeskJet 560C^{™}:

| Paper | Paper Number: |
|---|---|
| HP Printing Paper^{™} | 1 |
| HP Premium Plus^{™} Mkll | 2 |
| Epson Premium Photo^{™} | 3 |
| Ilford Instant Dry^{™} | 4 |

The resultant prints generally showed good lightfastness and ozone fastness.

## Claims

1. A process for ink jet printing an image on a substrate comprising applying thereto a composition comprising a liquid medium and a disazo compound of Formula (1):
A-N=N-L-N=N-A Formula (1)
wherein:
each A independently is optionally substituted phenyl or optionally substituted 1,2,4 - triazole, each A is different from the other and the optional substituents are selected from sulpho, hydroxy, nitro, amino, acetylamino and carboxy; and
L is a group of Formula (4) or (5): 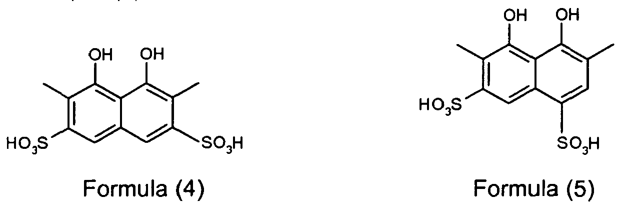
and SO₃H is in free acid or salt form: provided that
(i) at most one of the groups represented by A has a hydroxy substituent ortho to the -N=N-groups shown in Formula (1); and
(ii) at least one of the groups represented by A carries a group selected from sulpho and carboxy.

2. A composition for ink jet printing comprising:
(a) 0.2 to 12 parts of the disazo compound of Formula (1):
A-N=N-L-N=N-A Formula (1)
wherein:
each A independently is optionally substituted phenyl or optionally substituted 1,2,4 - triazole, each A is different from the other and the optional substituents are selected from sulpho, hydroxy, nitro, amino, acetylamino and carboxy; and
L is a group of Formula (4) or (5): 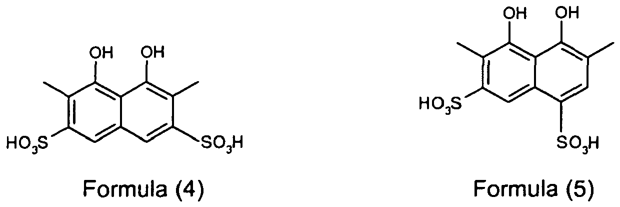 and SO₃H is in free acid or salt form; provided that at most one of the groups represented by A has a hydroxy substituent ortho to the -N=N- groups shown in Formula (1); and
(b) from 88 to 99.8 parts of a liquid medium;
wherein all parts are by weight and the number of parts of (a)+(b)=100.

3. A process for preparing a compound of Formula (1), as defined in claim 1 or 2, which comprises diazotising an amine of formula A-NH₂ to give a diazonium salt, and coupling the resultant diazonium salt with a compound of Formula (6):
A-N=N-LH Formula (6)
wherein L and each A independently are as defined in claim 1.

4. A process for the preparation of a compound of Formula (1) as defined in claim 1 or 2 which comprises the reaction of a compound of formula A-N=N-Q-N=N-A with a strong base, wherein each A independently is as defined in claim 1 and Q is an 1-amino-8-hydroxynaphthylene disulphonic acid.

5. A disazo compound of Formula (1) or a salt thereof:
A-N=N-L-N=N-A Formula (1)
wherein:
each A independently is optionally substituted phenyl or optionally substituted 1,2,4 - triazole, each A is different from the other and the optional substituents are selected from sulpho, hydroxy, nitro, amino, acetylamino and carboxy; and
L is a group of Formula (4) or (5): 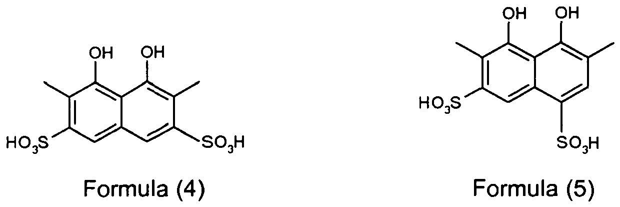 SO₃H is in free acid or salt form;
provided that:
(i) at most one of the groups represented by A has a hydroxy substituent ortho to the -N=N-groups shown in Formula (1);

6. A compound of Formula (1) or a salt thereof as defined in claim 5 wherein both groups represented by A carry a group selected from sulpho and carboxy.

7. A compound of Formula (1) or a salt thereof as defined in claim 6 wherein both groups represented by A carry a sulpho group.

8. A paper, an overhead projector slide or a textile material printed by means of a process as defined in claim 1, with a composition as defined in claim 2, or with a compound or salt as defined in claim 5.

9. An ink jet printer cartridge, optionally refillable, comprising one or more chambers and a composition, wherein the composition is present in at least one of the chambers and the composition is as defined in claim 2.

## Patentansprüche

1. Verfahren zur Bebilderung eines Substrats mittels Tintenstrahldruck, bei dem man das Substrat mit einer Zusammensetzung, umfassend ein flüssiges Medium und eine Disazoverbindung der Formel (1):
A-N=N-L-N=N-A Formel (1)
worin:
A jeweils unabhängig voneinander für gegebenenfalls substituiertes Phenyl oder gegebenenfalls substituiertes 1,2,4-Triazol steht, jedes A von dem anderen verschieden ist und die fakultativen Substituenten unter Sulfo, Hydroxy, Nitro, Amino, Acetylamino und Carboxy ausgewählt sind und
L für eine Gruppe der Formel (4) oder (5) steht: 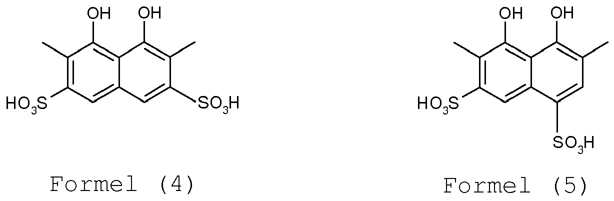 und SO₃H in Form der freien Säure oder in Salzform vorliegt; mit den Maßgaben, dass
(i) höchstens eine der durch A wiedergegebenen Gruppen einen Hydroxysubstituenten in ortho-Stellung zu den in Formel (1) gezeigten -N=N-Gruppen aufweist und
(ii) mindestens eine der durch A wiedergegebenen Gruppen eine unter Sulfo und Carboxy ausgewählte Gruppe trägt;
beaufschlagt.

2. Zusammensetzung für den Tintenstrahldruck, umfassend:
(a) 0,2 bis 12 Teile der Disazoverbindung der Formel (1) :
A-N=N-L-N=N-A Formel (1)
worin:
A jeweils unabhängig voneinander für gegebenenfalls substituiertes Phenyl oder gegebenenfalls substituiertes 1,2,4-Triazol steht, jedes A von dem anderen verschieden ist und die fakultativen Substituenten unter Sulfo, Hydroxy, Nitro, Amino, Acetylamino und Carboxy ausgewählt sind und
L für eine Gruppe der Formel (4) oder (5) steht: 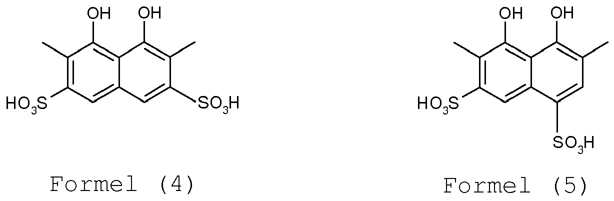 und SO₃H in Form der freien Säure oder in Salzform vorliegt; mit der Maßgabe, dass höchstens eine der durch A wiedergegebenen Gruppen einen Hydroxysubstituenten in ortho-Stellung zu den in Formel (1) gezeigten -N=N-Gruppen aufweist; und
(b) 88 bis 99,8 Teile eines flüssigen Mediums; wobei sich alle Teile auf das Gewicht beziehen und die Zahl der Teile von (a) + (b) =100 ist.

3. Verfahren zur Herstellung einer Verbindung der Formel (1) gemäß Anspruch 1 oder 2, bei dem man ein Amin der Formel A-NH₂ zu einem Diazoniumsalz diazotiert und das resultierende Diazoniumsalz mit einer Verbindung der Formel (6):
A-N=N-LH Formel (6)
worin L und A jeweils unabhängig voneinander die in Anspruch 1 angegebene Bedeutung besitzen, kuppelt.

4. Verfahren zur Herstellung einer Verbindung der Formel (1) gemäß Anspruch 1 oder 2, bei dem man eine Verbindung der Formel A-N=N-Q-N=N-A mit einer starken Base umsetzt, wobei A jeweils unabhängig voneinander die in Anspruch 1 angegebene Bedeutung besitzt und Q für eine 1-Amino-8-hydroxynaphthylendisulfonsäure steht.

5. Disazoverbindung der Formel (1) oder ein Salz davon:
A-N=N-L-N=N-A Formel (1)
worin:
A jeweils unabhängig voneinander für gegebenenfalls substituiertes Phenyl oder gegebenenfalls substituiertes 1,2,4-Triazol steht, jedes A von dem anderen verschieden ist und die fakultativen Substituenten unter Sulfo, Hydroxy, Nitro, Amino, Acetylamino und Carboxy ausgewählt sind und
L für eine Gruppe der Formel (4) oder (5) steht: 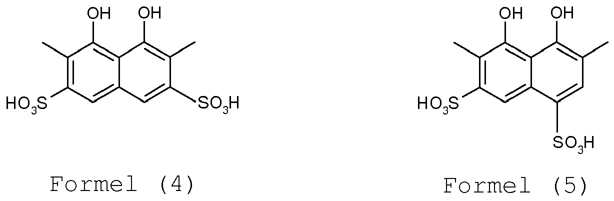 und SO₃H in Form der freien Säure oder in Salzform vorliegt; mit der Maßgabe, dass
(i) höchstens eine der durch A wiedergegebenen Gruppen einen Hydroxysubstituenten in ortho-Stellung zu den in Formel (1) gezeigten -N=N-Gruppen aufweist.

6. Verbindung der Formel (1) oder ein Salz davon nach Anspruch 5, wobei beide durch A wiedergegebene Gruppen eine unter Sulfo und Carboxy ausgewählte Gruppe tragen.

7. Verbindung der Formel (1) oder ein Salz davon nach Anspruch 6, wobei beide durch A wiedergegebene Gruppen eine Sulfogruppe tragen.

8. Papier, Overheadprojektorfolie oder Textilmaterial, bedruckt mit Hilfe eines Verfahrens gemäß Anspruch 1, mit einer Zusammensetzung gemäß Anspruch 2 oder mit einer Verbindung oder einem Salz gemäß Anspruch 5.

9. Gegebenenfalls wiederbefüllbare Tintenstrahldruckerpatrone, umfassend eine oder mehrere Kammern und eine Zusammensetzung, wobei die Zusammensetzung in mindestens einer der Kammern vorliegt und die Zusammensetzung wie in Anspruch 2 definiert ist.

## Revendications

1. Procédé d'impression à jet d'encre d'une image sur un substrat comprenant l'application sur celui-ci d'une composition comprenant un milieu liquide et un composé disazoïque de formule (1) :
**A-N=N-L-N=N-A** Formule (1)
dans laquelle :
chaque A est indépendamment phényle éventuellement substitué ou 1,2,4-triazole éventuellement substitué, chaque A est différent de l'autre et les substituants éventuels sont choisis parmi sulfo, hydroxy, nitro, amino, acétylamino et carboxy ; et
L est un groupement de formule (4) ou (5) : 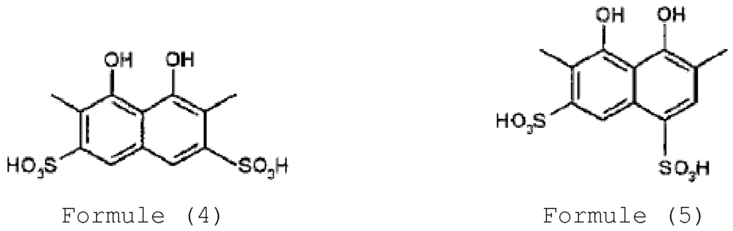 et SO₃H est un acide libre ou une forme saline : à condition que
(i) au plus l'un des groupements représentés par A ait un substituant hydroxy en ortho des groupements -N=N- présentés dans la formule (1) ; ; et
(ii) au moins l'un des groupements représentés par A porte un groupement choisi parmi sulfo et carboxy.

2. Composition pour impression à jet d'encre comprenant :
(a) 0,2 à 12 parties du composé disazoïque de formule (1) :
**A-N=N-L-N=N-A** Formule (1)
dans laquelle :
chaque A est indépendamment phényle éventuellement substitué ou 1,2,4-triazole éventuellement substitué, chaque A est différent de l'autre et les substituants éventuels sont choisis parmi sulfo, hydroxy, nitro, amino, acétylamino et carboxy ; et
L est un groupement de formule (4) ou (5) : 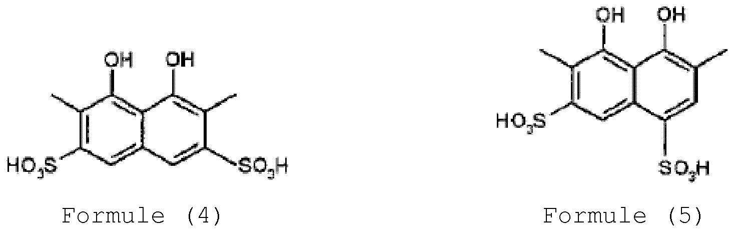 et SO₃H est un acide libre ou une forme saline ; à condition qu'au plus l'un des groupements représentés par A ait un substituant hydroxy en ortho des groupements -N=N- présentés dans la formule (1) ; et
(b) de 88 à 99,8 parties d'un milieu liquide ;
toutes les parties étant en poids et le nombre de parties de (a) + (b) =100 .

3. Procédé de préparation d'un composé de formule (1), tel que défini dans la revendication 1 ou 2, **caractérisé en ce qu'**il comprend la diazotation d'une amine de formule A-NH₂ pour donner un sel de diazonium, et le couplage du sel de diazonium résultant avec un composé de formule (6) :
**A-N=N-LH** Formule (6)
dans laquelle L et chaque A sont indépendamment tels que définis dans la revendication 1.

4. Procédé de préparation d'un composé de formule (1) tel que défini dans la revendication 1 ou 2, **caractérisé en ce qu'**il comprend la réaction d'un composé de formule A-N=N-Q-N=N-A avec une base forte, chaque A étant indépendamment tel que défini dans la revendication 1 et Q étant un acide 1-amino-8-hydroxynaphtylène-disulfonique.

5. Composé disazoïque de formule (1) ou un sel de celui-ci :
**A-N=N-L-N=N-A** Formule (1)
dans laquelle :
chaque A est indépendamment phényle éventuellement substitué ou 1,2,4-triazole éventuellement substitué, chaque A est différent de l'autre et les substituants éventuels sont choisis parmi sulfo, hydroxy, nitro, amino, acétylamino et carboxy ; et
L est un groupement de formule (4) ou (5) : 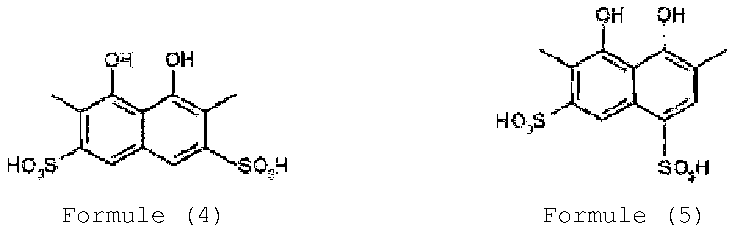 SO₃H est un acide libre ou une forme saline :
à condition que
(i) au plus l'un des groupements représentés par A ait un substituant hydroxy en ortho des groupements -N=N- présentés dans la formule (1).

6. Composé de formule (1) ou un sel de celui-ci tel que défini dans la revendication 5, **caractérisé en ce que** les deux groupements représentés par A portent un groupement choisi parmi sulfo et carboxy.

7. Composé de formule (1) ou un sel de celui-ci tel que défini dans la revendication 6, **caractérisé en ce que** les deux groupements représentés par A portent un groupement sulfo.

8. Papier, diapositive pour rétroprojecteur ou matière textile imprimé à l'aide d'un procédé tel que défini dans la revendication 1, avec une composition telle que définie dans la revendication 2, ou avec un composé ou sel tel que défini dans la revendication 5.

9. Cartouche pour imprimante à jet d'encre, éventuellement rechargeable, comprenant une ou plusieurs chambres et une composition, **caractérisée en ce que** la composition est présente dans au moins l'une des chambres et la composition est telle que définie dans la revendication 2.
